# EUROPEAN PATENT SPECIFICATION

(11) **EP 3 102 452 B1**
(45) Date of publication and mention of the grant of the patent: **22.01.2020**
(21) Application number: 15701994.4
(22) Date of filing: 03.02.2015
(51) Int. Cl.: B60K 6/36, B60K 6/383, B60W 10/02, B60W 10/06, B60W 30/18, B60K 6/48, B60W 10/113, F16H 3/00, F16H 3/091, B60W 20/30, B60W 20/40

(54) **TRANSMISSION FOR A VEHICLE, WITH ELECTRIC GENERATOR AND/OR MOTOR**
GETRIEBE FÜR EIN FAHRZEUG MIT STROMGENERATOR UND/ODER MOTOR
TRANSMISSION POUR VÉHICULE, COMPRENANT UN GÉNÉRATEUR ÉLECTRIQUE ET/OU UN MOTEUR

(30) Priority: 04.02.2014 GB 201401866
(43) Date of publication of application: 14.12.2016
(73) Proprietor: Jaguar Land Rover Limited, Coventry, Warwickshire CV3 4LF (GB)
(72) Inventor: HOSE, Markus, Coventry Warwickshire CV3 4LF (GB)
(74) Representative: Holmes, Matthew William
(86) International application number: PCT/EP2015/052148
(87) International publication number: WO 2015/117937

(56) References cited:
- EP-A1- 2 511 147
- WO-A1-2013/149885
- DE-A1- 19 745 995
- DE-A1- 19 950 679
- DE-B3-102012 009 484
- US-A1- 2005 115 344
- US-A1- 2011 198 139

## Description

### TECHNICAL FIELD

This invention relates to a transmission for a motor vehicle, in conjunction with an electric machine. The electric machine may harvest energy from the transmission, and/or deliver energy to the transmission.

### BACKGROUND TO THE INVENTION

One group of hybrid vehicles comprises an internal combustion engine driving the vehicle wheels via a multi-speed transmission; an electrical generator/motor is linked to the drive train so as to permit energy to be harvested from the transmission when available, and delivered to the transmission when desirable. For example energy may be harvested when the vehicle is coasting, and may be delivered to improve acceleration of the vehicle from rest. Energy storage is typically provided, for example in the form of an electric battery.

It has been proposed to connect the energy harvesting device to the vehicle transmission in a manner which permits the engine to be switched off during harvesting. By this means friction, windage and pumping losses of the engine can be eliminated along with fuelling of the engine, thus increasing the energy available for harvesting.

A dual clutch transmission of a motor vehicle has co-axial input shafts connected via respective drive clutches to a motor, typically an internal combustion engine. A plurality of speed ratios is provided in the transmission by respective pairs of gear wheels. The 'odd' ratios are associated with one drive clutch, and the 'even' ratios with the other drive clutch, so as to permit pre-selection of the next sequential speed ratio. A speed ratio change is effected by disengaging the currently engaged drive clutch and engaging the currently disengaged drive clutch.

Such a transmission is described in e.g. EP-A-0042677. Control systems have been developed to determine the pre-selected speed ratio, to smoothly engage a clutch from a stationary condition of the transmission, and to smoothly transfer drive between the clutches, when the transmission is rotating.

US-A-2007/0187160 discloses an electrical machine coupled at the input (drive clutch) side of a transmission casing to the input shaft. This arrangement requires a speed ratio of the transmission to be engaged for effective harvesting of energy due to momentum of a vehicle, and allows the drive clutch to be disengaged during harvesting so that the engine can be stopped. Connection to the input shaft may be preferable because the input shaft has a relatively high rotational speed as compared with other transmission components and this facilitates a high rotational speed of the electrical machine. However this prior art arrangement is not suitable for a dual clutch transmission because two co-axial input shafts are provided, and only one of them is accessible at the input side of the transmission casing. Linking an electrical machine to the accessible input shaft necessarily limits energy harvesting to only those speed ratios associated with the accessible input shaft.

US 2011/0198139 describes a drive system having a dual clutch transmission with two component transmissions, a dual clutch and an output shaft. The two component transmissions have a common main shaft and each has one component transmission input shaft. An electric machine can be connected positively and operatively to one of the component transmission input shafts and/or to the output shaft, or can be connected positively and operatively to one of the transmission input shafts and/or to the main shaft.

In the alternative, the electrical machine could be connected to the transmission output shaft, but this rotates for most of the time at a lower speed than the respective input shaft due to the speed ratio reduction provided in the transmission. Additional gearing would be required to achieve a high rotational speed of the electrical machine. In any event such gearing must be such that the electrical machine can tolerate maximum vehicle speed, so that it may not run efficiently at low vehicle speeds, such as during urban driving
It will be understood that the electrical machine may also be required to transmit energy to the vehicle, for example to boost acceleration or to provide motive power whilst the engine is switched off. In this mode it may be advantageous to supply energy to the transmission input shaft, and to select a speed ratio appropriate to instant conditions of e.g. vehicle speed, gradient and torque demand. The alternative of coupling of the electrical machine to the output shaft provides no possibility of a change of speed ratio.

### SUMMARY OF THE INVENTION

In an aspect of the invention there is provided a dual clutch transmission having drive clutches for driving coaxial input shafts from an internal combustion engine, and a rotary electrical machine for harvesting and/or transmitting energy from/to said transmission; wherein said electrical machine includes an armature coupled to both said input shafts via respective armature clutches, and wherein any said armature clutch comprises a one-way clutch.

Such an arrangement allows energy to be harvested from, and delivered to the transmission via either input shaft, and furthermore the arrangement permits switching-off of a vehicle engine by disengaging drive clutches associated with the input shafts.

Thus, embodiments of the invention enable pre-selection of speed ratios to be unaffected whilst the drive clutches are disengaged and the engine is stopped. Accordingly the transmission can be placed in an appropriate speed ratio for restarting of the engine, for example when a period of coasting has ceased.

In one example energy may be harvested in any forward speed ratio by connecting the back-driven input shaft to the electrical machine via the respective armature clutch. If desired, for example during long periods of coasting, the respective drive clutch may be disengaged to permit the engine to be switched off. The vehicle engine can be maintained in a state of readiness and re-started on demand, by for example activating the usual starter motor or by re-engaging the appropriate drive clutch.

The vehicle speed may vary during coasting, and the control system of the transmission may automatically select a different speed ratio. In such circumstances the control system may disengage one armature clutch, and engage the other to maintain substantially continuous drive to the electrical machine.

The one-way (or overrun) automatic clutches permit drive therethrough so long as the input speed of the one-way clutch exceeds the output speed thereof. These one-way clutches are typically arranged side-by-side with respective outputs fixed relative to the armature shaft, so that the clutch with the faster running input will drive the armature of the electrical machine.

In an embodiment of the invention one or both of the one-way clutches may include a locking device to permit drive from the electrical machine to the transmission, thereby to permit energy to be delivered to the vehicle drive train via one or other input shaft. Such energy may be capable of driving the vehicle with the internal combustion engine switched-off, or may contribute to the torque provided to the respective input shaft by the vehicle engine.

The armature clutches may be connected to the respective input shaft via a belt, chain or gears, as appropriate. In one embodiment the armature clutches are co-axial with the armature of the electrical machine, and may be at the same side thereof.

In another embodiment the armature clutches are co-axial with the input shafts and have a single output for the electrical machine, typically connected by a single drive belt or chain.

According to an aspect of the invention there is provided a method of providing a substantially continual drive connection between a rotary electrical machine and a dual clutch transmission of a motor vehicle, said rotary electrical machine being for harvesting and/or transmitting energy from/to said transmission, and said transmission having co-axial input shafts and drive clutches therefor, the method comprising: connecting an armature of said machine to both said input shafts via respective armature clutches; and driving from said input shafts to said armature through respective one-way clutches.

The method of this aspect of the invention may be implemented by substantially conventional transmission control techniques whereby a transmission forward speed ratio is selected according to parameters such as vehicle speed and engine torque demand. The respective armature clutch is engaged for energy harvesting and energy delivery. It will be appreciated that the armature of the electrical machine may in some circumstances idly rotate in the absence of an electromagnetic field, and thus not generate or deliver torque - this arrangement increases the versatility of the invention, and enhances the available options for control.

In an embodiment, the method comprises connecting the input shafts to the electrical machine via automatic one-way clutches, so that the faster running clutch provides drive to the armature.

Conventionally a vehicle engine has both a generator and a starter motor. An aspect of the present invention allows for substitution by the electrical machine.

In one embodiment the electrical machine can substitute for the generator of the vehicle engine, and moreover can continue to generate electricity whist in energy harvesting mode notwithstanding that the vehicle engine has been stopped whilst the vehicle is moving.

In another embodiment the electrical machine can substitute for the starter motor by utilizing a torque path via reverse speed ratio and both input shafts of a dual clutch transmission, so long as a torque path to the transmission output is obviated, i.e. disengaged or disconnected.

For example the electrical machine may drive backwardly an input shaft which has the associated drive clutch disconnected; drive passes via reverse speed ratio to the other input shaft, which rotates forwardly; the drive clutch of said other input shaft is engaged to turn the vehicle engine which will start if in a condition to do so.

Once started, the vehicle engine may be disconnected from the transmission by disengaging the drive clutch which is engaged, and the transmission may move to a neutral condition from which the vehicle driver may select an appropriate speed ratio. If a one-way clutch is provided as armature clutch, it will automatically release when engine speed exceeds cranking speed.

The skilled person will realise that by reversing the torque path, a one-way clutch will permit the electrical machine to drive an input shaft without the necessity of a locking device.

Drive to the output of the transmission may be obviated, i.e. disengaged or disconnected, in any suitable manner, for example by releasing a connection, such as a dog clutch, between a gear wheel and the shaft to which it is coupled. Such an arrangement may be possible without increasing the number of disengageable components within a dual clutch transmission.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible.

Other features of the aspects of the invention are defined in the appended claims.

### BRIEF DESCRIPTION OF DRAWINGS

Other features of the invention will be apparent from the following description of several embodiments illustrated by way of example in the accompanying drawings in which:-
- Fig. 1: is a schematic illustration of a dual clutch transmission.
- Fig. 2: illustrates a part of the transmission of Fig. 1, and adapted to the invention.
- Fig. 3: illustrates an alternative to the transmission of Fig. 2.
- Fig. 4: illustrates another alternative to the transmission of Figs. 1 and 2.
- Fig. 5: illustrates an engine starting arrangement using reverse gear ratio.
- Fig. 6: illustrates an alternative starting arrangement using reverse gear ratio.

### DESCRIPTION OF EMBODIMENTS

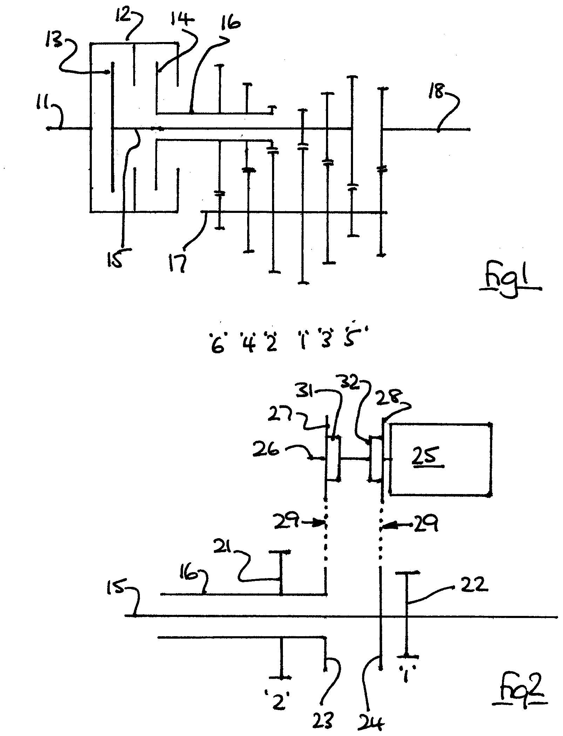

With reference to Fig. 1, a driving shaft 11, from a motor such as an internal combustion engine, drives a clutch housing 12 within which two driven plates 13, 14 are separately engageable. The clutch plates are connected to respective transmission input shafts 15, 16 which are co-axial. Each input shaft carries three gear wheels, which mate with respective gear wheels of a layshaft 17. The layshaft is also connected via a gear wheel pair to an output shaft 18 of the transmission, which may be co-axial with the input shafts.

The transmission provides six speed ratios, indicated by the numbers 1-6, and the 'odd' ratios are associated with one input shaft whilst the 'even' ratios are associated with the other input shaft.

As is well understood one gear wheel of each ratio pair is loose, and can be engaged with the respective shaft by a mechanism such as a synchromesh cone and dog. These components are omitted to improve clarity. In use one loose gear wheel can be connected to the respective shaft to provide drive from the input shaft to the output shaft.

In a DCT transmission, the clutches 13, 14 are alternately engaged, so that the speed ratio which is next anticipated can be pre-selected, and the speed ratio change completed by switching drive from one clutch to the other.

Thus, by way of example, second speed ratio may be selected by coupling the respective loose gear wheel with its shaft, to connect the drive and output shafts 11, 18 via the clutch driven plate 14 and the outer input shaft 16.

Whilst second speed ratio is driving, third (or first) speed ratio may be also selected by coupling the respective loose gear wheel to its shaft. The respective clutch driven plate 13 is rotated (back driven), but is not engaged by the clutch housing.

The speed ratio is changed by disengaging driven plate 14 whilst engaging driven plate 13. Second speed ratio is now back driven and may remain engaged, or may be disengaged by de-selecting the respective loose gear from its shaft, for example in favour of fourth speed ratio.

By this means rapid sequential changes of speed ratio may be performed, with pre-selection of the next anticipated speed ratio. Systems have been developed for predicting and pre-selecting the next speed ratio, and form no part of the present invention. It will be understood that the pre-selected speed ratio may change before being required to take up drive.

A DCT transmission may have many different arrangements of shafts and gears, but is typically characterised by co-axial input shafts 15, 16. The arrangement illustrated in Fig. 1 is an example only.

An embodiment of the invention is illustrated schematically in Fig. 2 which shows the region in the centre of the transmission where the inner input shaft 15 protrudes from the outer input shaft 16. The associated adjacent gear wheels 21, 22 associated with speed ratios '2' and '1' of the transmission are illustrated.

Provided between the gear wheels 21, 22 are respective sprockets 23, 24. In this example the sprockets have the same diameter. An electrical generator 25 is provided radially distant from the axis of the input shafts and has a generator armature 26 having loose sprockets 27, 28 connected to the sprockets 23, 24 by respective chains 29. Each sprocket 27, 28 may be coupled to the generator shaft by a respective one-way (or overrun or sprag) clutch 31, 32. The one-way clutches are arranged in the same sense so as to be automatically engageable to drive the generator shaft in the same direction. One-way clutches are well-known, and need not be further described here.

In conventional use of a DCT transmission, such as that illustrated in Fig. 1, one input shaft 15, 16 is always in a driven condition from the drive shaft 11, whereas the other input shaft 15, 16 may also be in a driven condition by virtue of pre-selection of the next required speed ratio. In consequence, in accordance with the invention the sprockets 27, 28 are generally both driven, and whichever sprocket is rotating the fastest will cause its associated one-way clutch to be engaged, thus driving the armature of the generator 25.

The arrangement provides for continual driving of the generator at the highest speed available from one or other of the input shafts 15, 16. It will also be understood that switching from one one-way clutch to the other requires no control mechanism; it is fully automatic.

The generator 25 may be used, for example, to charge a battery or other energy storage device of a hybrid vehicle.

The generator 25 also remains coupled to the transmission when the engine is disconnected by releasing the clutch driven plates 13, 14. In such circumstances the engine may be stopped to save fuel, and if the vehicle is coasting both sprockets 27, 28 will be driven from the transmission output shaft 18 - the faster running sprocket will drive the generator shaft via the associated one-way clutch.

Whilst coasting, the control system of the transmission may select a speed ratio best suited to driving the generator efficiently, for example a ratio which ensures high speed of one input shaft. Another speed ratio may be pre-selected and matched to vehicle speed so as to provide a torque path from the engine when coasting has ceased. Furthermore, when driving at a low road speed, the control system may cause engagement of a speed ratio to ensure high speed of the back driven input shaft, thereby to provide the highest desirable rotational speed of the electrical machine.

It will be understood that instead of providing a separate drive component for the generator, such as sprockets 27, 28, a gear wheel of an input shaft may be used to drive the generator via a separate gear train. In this arrangement the input shaft gear wheel fulfils a dual function.

The arrangement of Fig. 2 provides for connection of the generator to a mid-point of the transmission, and in one embodiment the sprockets and chains are within the transmission casing. The generator is outside the transmission casing, the armature drive shaft passing through a suitable opening and oil seal. In another embodiment, the generator may be within the transmission casing and cooled by the transmission lubricating fluid.

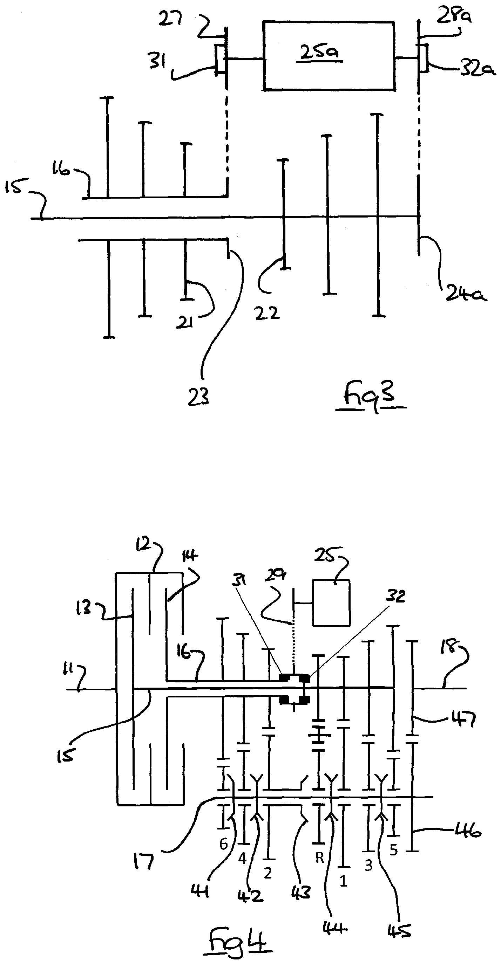

Fig. 3 illustrates a variant, in which common parts carry the same reference numerals. A sprocket 24a is associated with the inner input shaft 15, and is coupled at the other side of the gear wheels on the inner input shaft. The generator 25a has a through shaft adapted to be driven from either end via respective sprockets 27, 28a and one-way clutches 31, 32a. Operation of this embodiment is identical to that of Fig. 2, but may be more appropriate where the space between the 'even' and 'odd' gear wheels is insufficient to accommodate side-by-side connections to the generator.

Fig. 4 illustrates a further variant in which common parts carry the same reference numeral. In this embodiment the layshaft 17 is illustrated together with layshaft gears and a reverse gear train 'R'. Selection of each speed ratio is via conventional synchromesh hubs 41-45 by which loose gear wheels can be connected one at a time to the layshaft 17. The output shaft 18 is driven from the layshaft 17 by final drive gear wheels 46, 47 which are in constant mesh.

In this embodiment, one-way clutches 31, 32 are provided co-axial with the input shaft axis and have a common output which drives via a single chain or belt 29 to the electrical machine 25. The arrangement of Fig. 4 thus has a reduced number of parts as compared with the arrangement of Fig. 2 in which the one-way clutches are co-axial with the generator shaft axis.

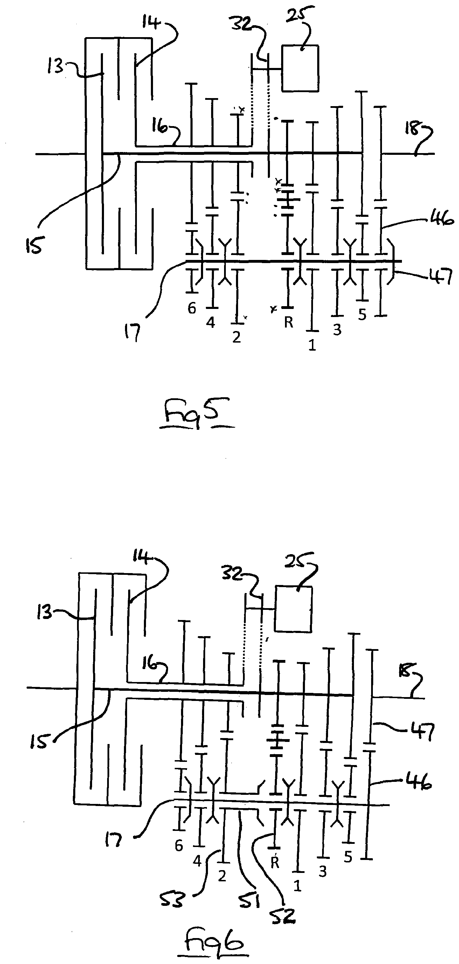

As noted above, one-way clutches are automatic and require no actuation or control device. The embodiments of Figs. 5 and 6 show arrangements whereby the electrical machine can be used as a starter motor for the vehicle engine, by utilizing reverse gear ratio, thus allowing a conventional engine mounted starter motor to be dispensed with.

In Fig. 5, a gear wheel arrangement corresponds to Figs. 1-4, and two one-way clutches are arranged on the axis of the generator shaft, each driven by a respective belt or chain from a respective input shaft.

However the layshaft 17 can be de-coupled on demand from the output gear wheel 46 via disengagement of a conventional synchromesh hub 47.

For transmission of torque the synchromesh hub 47 is always engaged, and neutral is obtained by disengagement of the synchromesh hubs associated with the loose layshaft gear wheels.

Upon disengagement of the synchromesh hub 47, the generator 25 may act as a starter motor in the following manner.

The generator 25, acting as a motor, may drive the inner input shaft 15 backwardly via the one-way clutch 32; the drive clutch 13 is disengaged. The input shaft 15 drives the layshaft 17 backwardly, by selection of reverse speed ratio. The layshaft 17 drives the outer input shaft 16 forwardly via the 2^{nd} speed gear wheels. The drive clutch 14 is engaged to rotate the engine forwardly and, if in a condition to start, the engine will start.

After starting of the engine, the drive clutch 14 may be immediately disengaged, and operation of the generator as starter motor is ceased.

The arrangement will also work if drive is from the generator via outer input shaft 16, the 2^{nd} speed gear ratio and reverse speed ratio to the inner input shaft 15 and drive clutch 13.

It will be appreciated that a different forward ratio may be selected if a higher torque multiplication is required for starting. In this example 4^{th} speed or 6^{th} speed gear wheels could be used in place of the 2nd speed gear wheels. Different speed ratios may be used depending on whether the engine is started from a hot or cold condition.

Flexibility of starting ratio in this embodiment means that the electrical machine design and specification is less constrained than if only one speed ratio was available for engine starting.

Once the engine is started, and the transmission is in neutral, the layshaft 17 is connected to the output gear wheel 46 for normal transmission operation. Both drive clutches are disengaged, and suitable speed ratios are selected according to the intentions of the vehicle driver. In this condition the transmission operates as a conventional dual clutch transmission.

In the arrangement of Fig. 6, the disconnectable output gear 46 is not required, and instead a layshaft sleeve 51 is provided to couple the reverse ratio layshaft gear wheel 52 to the loose second speed gear wheel 53. A conventional synchromesh hub is also provided to couple the reverse speed gear wheel 52 to the layshaft 17.

Operation of the embodiment of Fig. 6 in engine starting mode is identical to that of Fig. 5. The generator 25 drives via one-way clutch 32 to the inner input shaft 15, and then via reverse speed ratio, sleeve 51 and second speed ratio to the outer input shaft 16. In this embodiment the layshaft 17 remains stationary during starting of the engine; however in both the embodiments of Fig. 5 and the embodiment of Fig. 6, the output shaft 18 is disconnected from the input shafts 15, 16.

Other arrangements are of course possible, provided that drive to the output shaft is obviated, i.e. disengaged or disconnected, during engine starting via the reverse gear train.

## Claims

1. A dual clutch transmission having drive clutches (13, 14) for driving coaxial input shafts (15, 16) from an internal combustion engine, and a rotary electrical machine (25) for harvesting and/or transmitting energy from/to said transmission; wherein said electrical machine (25) includes an armature (26) coupled to both said input shafts (15, 16) via respective armature clutches, and wherein any said armature clutch comprises a one-way clutch (31, 32, 32a).

2. A transmission according to claim 1 wherein said armature (26) is coupled to said transmission by one of a gear train, a chain, a toothed belt, and a vee belt (29).

3. A transmission according to claim 1 or claim 2 wherein said input shafts (15, 16) are coupled to said armature (26) at the same end thereof.

4. A transmission according to any preceding claim wherein a respective one-way clutch (31, 32, 32a) is provided for each said input shaft (15, 16).

5. A transmission according to claim 4 wherein said one-way clutches (31, 32, 32a) are on the rotational axis of said armature (26).

6. A transmission according to claim 4 wherein said one-way clutches (31, 32, 32a) are on the rotational axis of said input shafts (15, 16), and have a common output member coupled to said electrical machine (25).

7. A transmission according to any of claims 4-6 wherein one of said one-way clutches (31, 32, 32a) included is lockable to prevent relative rotational movement in either direction.

8. A transmission according to any preceding claim wherein the rotational axis of said electrical machine (25) is parallel with said input shafts (15, 16).

9. A transmission according to any preceding claim wherein said electrical machine (25) is a generator (25a).

10. A transmission according to any preceding claim wherein the radially outermost input shaft (16) has a plurality of axially spaced first gear wheels thereon, and said armature (26) is connected to the outermost input shaft (16) adjacent an axially endmost of said first gear wheels, optionally wherein said plurality of first gear wheels is at the drive clutch side of the connection to said armature (26) or wherein one of said first gear wheels drives said electrical machine (25).

11. A transmission according to claim 10 wherein the radially innermost input shaft (15) has a plurality of axially spaced second gear wheels thereon, and said armature (26) is connected to the innermost input shaft (15) adjacent an axially endmost of said second gear wheels, optionally wherein said plurality of second gear wheels is at the drive clutch side of the connection to said armature (26) or wherein one of said second gear wheels drives said electrical machine (25).

12. A transmission according to any of claims 1-9 wherein the inner input shaft (15) protrudes from the outer input shaft (16), both the input shafts (15, 16) have gear wheels thereon, and the respective connections to said armature (26) are immediately adjacent and between said gear wheels.

13. A transmission according to any preceding claim and comprising the co-axial input shafts (15, 16) on an input shaft axis, a layshaft (17) on a layshaft axis parallel to the input shaft axis, a constant mesh forward gear train between one input shaft and said layshaft, a constant mesh reverse gear train between the other input shaft and said layshaft, and a sleeve (51) rotatable about said layshaft (17) for coupling said forward gear train and reverse gear train on demand, optionally wherein said sleeve includes a dog clutch.

14. A transmission according to any of claims 1-12 and comprising two co-axial input shafts (15, 16) on an input shaft axis, a layshaft (17) on a layshaft axis parallel to the input shaft axis, a constant mesh forward gear train for driving between one input shaft and said layshaft (17), a constant mesh reverse gear train for driving between the other input shaft and said layshaft (17), and an output shaft (18) in driving connection with said layshaft (17), wherein said output shaft (18) is disconnectable from said layshaft (17) in use, optionally wherein said output shaft (18) is on said input shaft axis, a constant mesh gear train connects said layshaft and output shaft, and a dog clutch is provided between said layshaft and said gear train.

15. A method of providing a substantially continual drive connection between a rotary electrical machine (25) and a dual clutch transmission of a motor vehicle, said rotary electrical machine (25) being for harvesting and/or transmitting energy from/to said transmission, and said transmission having co-axial input shafts (15, 16) and drive clutches (13, 14) therefor, the method comprising:
connecting an armature (26) of said machine (25) to both said input shafts (15, 16) via respective armature clutches; and
driving from said input shafts to said armature through respective one-way clutches (31, 32, 32a).

## Patentansprüche

1. Doppelkupplungsgetriebe mit Antriebskupplungen (13, 14) zum Antreiben von koaxialen Eingangswellen (15, 16) von einem Verbrennungsmotor und einer drehenden elektrischen Maschine (25) zum Gewinnen und/oder Übertragen von Energie von/zu dem Getriebe;
wobei die elektrische Maschine (25) einen Anker (26) beinhaltet, der über jeweilige Ankerkupplungen mit den beiden Eingangswellen (15, 16) gekoppelt ist, und wobei jede Ankerkupplung eine Freilaufkupplung (31, 32, 32a) umfasst.

2. Getriebe nach Anspruch 1, wobei der Anker (26) durch einen Zahnradsatz, eine Kette, einen Zahnriemen oder einen Keilriemen (29) mit dem Getriebe gekoppelt ist.

3. Getriebe nach Anspruch 1 oder 2, wobei die Eingangswellen (15, 16) mit dem Anker (26) an demselben Ende davon gekoppelt sind.

4. Getriebe nach einem der vorhergehenden Ansprüche, wobei eine jeweilige Freilaufkupplung (31,32, 32a) für jede Eingangswelle (15, 16) bereitgestellt ist.

5. Getriebe nach Anspruch 4, wobei die Freilaufkupplungen (31, 32, 32a) sich auf der Drehachse des Ankers (26) befinden.

6. Getriebe nach Anspruch 4, wobei die Freilaufkupplungen (31, 32, 32a) sich auf der Drehachse der Eingangswellen (15, 16) befinden und ein gemeinsames Ausgangselement mit der elektrischen Maschine (25) gekoppelt aufweisen.

7. Getriebe nach einem der Ansprüche 4-6, wobei eine der beinhalteten Freilaufkupplungen (31, 32, 32a) verriegelbar ist, um eine relative Drehbewegung in beiden Richtungen zu verhindern.

8. Getriebe nach einem der vorhergehenden Ansprüche, wobei die Drehachse der elektrischen Maschine (25) parallel zu den Eingangswellen (15, 16) ist.

9. Getriebe nach einem der vorhergehenden Ansprüche, wobei die elektrische Maschine (25) ein Generator (25a) ist.

10. Getriebe nach einem der vorhergehenden Ansprüche, wobei die radial äußerste Eingangswelle (16) mehrere axial beabstandete erste Zahnräder darauf aufweist, und wobei der Anker (26) mit der äußersten Eingangswelle (16) verbunden ist, die zu einem axial letzten der ersten Zahnräder benachbart ist, optional, wobei sich die mehreren ersten Zahnräder auf der Seite der Antriebskupplung der Verbindung mit dem Anker (26) befinden, oder wobei eines der ersten Zahnräder die elektrische Maschine (25) antreibt.

11. Getriebe nach Anspruch 10, wobei die radial innerste Eingangswelle (15) mehrere axial beabstandete zweite Zahnräder darauf aufweist, und wobei der Anker (26) mit der innersten Eingangswelle (15) verbunden ist, die zu einem axial letzten der zweiten Zahnräder benachbart ist, optional, wobei sich die mehreren zweiten Zahnräder auf der Seite der Antriebskupplung der Verbindung mit dem Anker (26) befinden, oder wobei eines der zweiten Zahnräder die elektrische Maschine (25) antreibt.

12. Getriebe nach einem der Ansprüche 1-9, wobei die innere Eingangswelle (15) von der äußeren Eingangswelle (16) hervorsteht, wobei beide der Eingangswellen (15, 16) Zahnräder darauf aufweisen, und die jeweiligen Verbindungen zu dem Anker (26) unmittelbar benachbart und zwischen den Zahnrädern sind.

13. Getriebe nach einem der vorhergehenden Ansprüche und umfassend die koaxialen Eingangswellen (15, 16) an einer Eingangswellenachse, eine Vorgelegewelle (17) an einer Vorgelegewellenachse parallel zu der Eingangswellenachse, einen Schaltmuffenvorwärtszahnradsatz zwischen einer Eingangswelle und der Vorgelegewelle, einen Schaltmuffenrückwärtszahnradsatz zwischen der anderen Eingangswelle und der Vorgelegewelle und eine Muffe (51), die um die Vorgelegewelle (17) drehbar ist, zum Kuppeln des Vorwärtszahnradsatzes und des Rückwärtszahnradsatzes bei Bedarf, optional, wobei die Muffe eine Klauenkupplung beinhaltet.

14. Getriebe nach einem der vorhergehenden Ansprüche 1-12 und umfassend zwei koaxiale Eingangswellen (15, 16) an einer Eingangswellenachse, eine Vorgelegewelle (17) an einer Vorgelegewellenachse parallel zu der Eingangswellenachse, einen Schaltmuffenvorwärtszahnradsatz zum Antreiben zwischen einer Eingangswelle und der Vorgelegewelle (17), einen Schaltmuffenrückwärtszahnradsatz zum Antreiben zwischen der anderen Eingangswelle und der Vorgelegewelle (17) und eine Ausgangswelle (18) in Antriebsverbindung mit der Vorgelegewelle (17), wobei die Ausgangswelle (18) in Verwendung von der Vorgelegewelle (17) trennbar ist, optional wobei die Ausgangswelle (18) sich auf der Eingangswellenachse befindet, ein Schaltmuffenzahnradsatz die Vorgelegewelle und die Ausgangswelle verbindet und eine Klauenkupplung zwischen der Vorgelegewelle und dem Zahnradsatz bereitgestellt ist.

15. Verfahren zum Bereitstellen einer im Wesentlichen kontinuierlichen Antriebsverbindung zwischen einer drehenden elektrischen Maschine (25) und einem Doppelkupplungsgetriebe eines Kraftfahrzeuges, wobei die drehende elektrische Maschine (25) zum Gewinnen und/oder Übertragen von Energie aus/zu dem Getriebe dient und wobei das Getriebe koaxiale Eingangswellen (15, 16) und Antriebskupplungen (13, 14) dafür aufweist, wobei das Verfahren Folgendes umfasst:
Verbinden eines Ankers (26) der Maschine (25) mit den beiden Eingangswellen (15, 16) über jeweilige Ankerkupplungen; und
Antreiben von den Eingangswellen zu dem Anker durch jeweilige Freilaufkupplungen (31, 32, 32a).

## Revendications

1. Transmission à double embrayage ayant des embrayages d'entraînement (13, 14) pour entraîner des arbres d'entrée coaxiaux (15, 16) à partir d'un moteur à combustion interne, et une machine électrique rotative (25) pour récolter et/ou transmettre de l'énergie de/vers ladite transmission ;
dans laquelle ladite machine électrique (25) comprend une armature (26) couplée aux deux arbres d'entrée (15, 16) par l'intermédiaire d'embrayages d'armature respectifs, et dans laquelle tout embrayage d'armature comprend un embrayage à sens unique (31, 32, 32, 32a).

2. Transmission selon la revendication 1, dans laquelle ladite armature (26) est couplée à ladite transmission par l'un d'un engrenage, d'une chaîne, d'une courroie crantée et d'une courroie en V (29).

3. Transmission selon la revendication 1 ou la revendication 2, dans laquelle lesdits arbres d'entrée (15, 16) sont couplés à ladite armature (26) à la même extrémité de celle-ci.

4. Transmission selon toute revendication précédente, dans laquelle un embrayage unidirectionnel respectif (31, 32, 32, 32a) est prévu pour chacun desdits arbres d'entrée (15, 16).

5. Transmission selon la revendication 4, dans laquelle lesdits embrayages unidirectionnels (31, 32, 32a) sont sur l'axe de rotation de ladite armature (26).

6. Transmission selon la revendication 4, dans laquelle lesdits embrayages unidirectionnels (31, 32, 32, 32a) sont sur l'axe de rotation desdits arbres d'entrée (15, 16), et ont un élément de sortie commun couplé à ladite machine électrique (25).

7. Transmission selon l'une quelconque des revendications 4 à 6, dans laquelle l'un desdits embrayages unidirectionnels (31, 32, 32a) inclus peut être verrouillé pour empêcher un mouvement de rotation relatif dans une direction ou dans l'autre.

8. Transmission selon toute revendication précédente, dans laquelle l'axe de rotation de ladite machine électrique (25) est parallèle auxdits arbres d'entrée (15, 16).

9. Transmission selon toute revendication précédente, dans laquelle ladite machine électrique (25) est un générateur (25a).

10. Transmission selon toute revendication précédente, dans laquelle l'arbre d'entrée (16) le plus extérieur radialement a une pluralité de premières roues dentées espacées axialement sur celui-ci, et ladite armature (26) est reliée à l'arbre d'entrée le plus extérieur (16) adjacent à une extrémité axiale desdites premières roues dentées, éventuellement dans laquelle ladite pluralité de premières roues dentées est du côté embrayage de l'entraînement du raccordement à ladite armature (26) ou dans laquelle une desdites premières roues dentées entraîne ladite machine électrique (25).

11. Transmission selon la revendication 10, dans laquelle l'arbre d'entrée (15) le plus intérieur radialement comporte une pluralité de roues dentées secondaires espacées axialement, et ladite armature (26) est reliée à l'arbre d'entrée le plus intérieur (15) adjacent à une extrémité axiale desdites roues dentées secondaires, éventuellement dans laquelle ladite pluralité de roues dentées secondaires est du côté de l'accouplement d'entraînement du raccordement avec ladite armature (26) ou dans laquelle une desdites deuxièmes roues dentées entraîne ladite machine électrique (25).

12. Transmission selon l'une quelconque des revendications 1 à 9, dans laquelle l'arbre d'entrée intérieur (15) dépasse de l'arbre d'entrée extérieur (16), les deux arbres d'entrée (15, 16) portent des roues dentées, et les connexions respectives avec ladite armature (26) sont immédiatement adjacentes et entre lesdites roues dentées.

13. Transmission selon toute revendication précédente et comprenant les arbres d'entrée coaxiaux (15, 16) sur un axe d'arbre d'entrée, un arbre de renvoi (17) sur un axe d'arbre de renvoi parallèle à l'axe d'arbre d'entrée, un train d'engrenage avant à maillage constant entre un arbre d'entrée et ledit arbre de renvoi, un train d'engrenage arrière à maillage constant entre l'arbre d'entrée et ledit arbre de renvoi et un manchon (51) rotatif autour dudit arbre de renvoi (17) pour accoupler sur demande ledit train d'engrenage avant et ledit train d'engrenage arrière, éventuellement dans lequel ledit manchon comprend un embrayage à roue à blocage.

14. Transmission selon l'une quelconque des revendications 1-12 et comprenant deux arbres d'entrée coaxiaux (15, 16) sur un axe d'arbre d'entrée, un arbre de renvoi (17) sur un axe d'arbre de renvoi parallèle à l'axe d'arbre d'entrée, un train d'engrenage avant à mailles constantes pour entraîner entre un arbre d'entrée et ledit arbre de renvoi (17), un train d'engrenage arrière à mailles constantes pour entraîner entre l'autre arbre d'entrée et ledit arbre de renvoi (17), et un arbre de sortie (18) en liaison d'entraînement avec ledit arbre de renvoi (17), dans lequel ledit arbre de sortie (18) peut être déconnecté dudit arbre de renvoi (17) en service, éventuellement dans lequel ledit arbre de sortie (18) est sur ledit axe d'arbre d'entrée, un train à maille constante relie ledit arbre de renvoi et ledit arbre de sortie, et un embrayage à came est prévu entre ledit arbre de renvoi et ledit train à pignons.

15. Procédé pour établir une connexion d'entraînement sensiblement continue entre une machine électrique rotative (25) et une transmission à double embrayage d'un véhicule automobile, ladite machine électrique rotative (25) étant destinée à recueillir et/ou à transmettre de l'énergie de/vers ladite transmission, et ladite transmission ayant des arbres d'entrée coaxiaux (15, 16) et leurs accouplements d'entraînement (13, 14), le procédé comprenant :
connecter un induit (26) de ladite machine (25) aux deux arbres d'entrée (15, 16) via des embrayages d'induit respectifs ; et
l'entraînement depuis lesdits arbres d'entrée jusqu'à ladite armature par des embrayages unidirectionnels respectifs (31, 32, 32, 32a).
